(19) **Europäisches Patentamt / European Patent Office / Office européen des brevets**

(11) **EP 4 723 539 A1**

(12) # EUROPEAN PATENT APPLICATION

(43) Date of publication:
**08.04.2026   Bulletin 2026/15**

(21) Application number: **24315450.7**

(22) Date of filing: **02.10.2024**

(51) International Patent Classification (IPC):
***H04L 9/00*** (2022.01)          ***H04L 9/30*** (2006.01)

(52) Cooperative Patent Classification (CPC):
**H04L 9/008; H04L 9/3093;** H04L 2209/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Zama SAS**
**75002 Paris (FR)**

(72) Inventor: **Joye, Marc François C.**
**75002 Paris (FR)**

(74) Representative: **DeltaPatents B.V.**
**Fellenoord 370**
**5611 ZL Eindhoven (NL)**

(54)    **SYSTEM AND METHOD TO CONTROL NOISE IN A HOMOMORPHIC COMPUTATION SYSTEM**

(57)    Some embodiments are directed to controlling control noise in a homomorphic computation system. A plurality of different encryptions of an encrypted message, may be obtained, which may include applying a homomorphic operation to the encrypted message and a homomorphic encryptions of a neutral element. An encryption is selected from the plurality with a low noise estimate.

*100*

*Fig. 1a*

*Fig. 1b*

EP 4 723 539 A1

**Description**

**TECHNICAL FIELD**

The presently disclosed subject matter relates to a method to control noise in a homomorphic computation system, a cryptographic system, and computer-readable media.

**BACKGROUND**

Encryption enables the protection of sensitive data while it is stored or when it needs to be transferred. However, standard encryption technologies require data to be decrypted in order to be processed. The idea behind homomorphic encryption [RAD78] is to never decrypt and to directly compute on encrypted data. It bears its name from the mathematical notion of homomorphism: elements of one set are transformed to elements of a second set while maintaining the relationships between the elements of the two sets.

Applied to encryption, this means that operating on plaintexts, e.g., unencrypted data, or on ciphertexts, e.g., encrypted data, will yield an equivalent result-in the clear when operating on plaintexts and under an encrypted form when operating on ciphertexts. For example, given any two ciphertexts $\mathbf{c}$ and $\mathbf{c'}$ respectively encrypting messages m and $m'$, there exists a public operation $\boxplus$ such that $\mathbf{c''} = \mathbf{c} \boxplus \mathbf{c'}$ is an encryption of $m'' = m + m'$. For example, the homomorphic scheme like Regev cryptosystem [Reg09] for LWE-type encryption is additively homomorphic, so that the public operation $\boxplus$ in this example may be the addition of ciphertext. LWE-type encryption is further expanded upon herein.

Cryptosystems enabling addition or multiplication of ciphertexts (but not both operations) are called partially homomorphic encryption schemes; examples include the (exponent) ElGamal cryptosystem [E1G85] or the Paillier cryptosystem [Pai99]. An encryption scheme is called fully homomorphic when it supports both addition and multiplication of ciphertexts, as any program can be represented as a circuit of additions and multiplications. Instead of relying on addition and multiplication, another way known to achieve fully homomorphic encryption is to rely on the paradigm of functional circuits [CJP21]. Within this paradigm, an encryption scheme can be fully homomorphic as long as it supports addition of ciphertexts and the evaluation of univariate functions on ciphertexts.

The first fully homomorphic scheme (FHE) was discovered by Craig Gentry [Gen10].

For practical reasons, ciphertexts are implemented on discrete structures; typically, on an algebraic structure modulo q. Parameter q is referred to as the ciphertext modulus. Even for cryptosystems defined over sets with infinite precision like the real torus $\mathbb{T} = \mathbb{R}/\mathbb{Z}$ for the TFHE encryption scheme [CGGI20], their concrete implementation relies on a discrete structure-the discretized torus modulo q in the case of TFHE [Joy22].

Most solutions for fully homomorphic encryption rely on hard lattice problems. Accordingly, the resulting ciphertexts typically contain a certain level of noise to guarantee the security of the encryption. The issue however is that computing homomorphically tends to increase the noise level in the ciphertext. As long as the noise is below a certain threshold, the ciphertext can be decrypted. However, if the noise grows too much, it may overflow into the data itself, rendering decryption impossible. To prevent this from happening, a special noise-reduction operation called bootstrapping can be applied to the ciphertext, effectively resetting the noise to a nominal level. Following Gentry's discovery, successive generations of FHE emerged, aiming mostly at controlling the noise growth in homomorphic computations and/or improving the bootstrapping. Two approaches have emerged:

Bootstrapped schemes: FHE schemes are designed with the main goal of reducing as much as possible the computing overhead induced by bootstrapping. Examples of such schemes include FHEW [DM15], TFHE [CGGI20] and its programmable extension [CJP21], and FINAL [BIP+22].

Leveled schemes: FHE schemes are parametrized so that the circuit representing a given function can be evaluated homomorphically without resorting to the bootstrap operation. As homomorphic multiplication typically introduces the most noise, what typically matters is the multiplicative depth (or number of levels) of the circuit being evaluated, that is, the largest sequence of consecutive multiplications. A leveled FHE scheme therefore provisions a noise budget to support L levels of multiplications where L is the multiplicative depth of the circuit. Examples of such FHE schemes include BFV [Bra12], [FV12], BGV [BGV14], and CKKS [CKKS17].

There is a need to better control noise in homomorphic computations.

**SUMMARY**

It would be advantageous to have an improved way to control noise development during homomorphic computation. A cryptographic, computer-implemented method to control noise in a homomorphic computation system, and a corresponding method and computer media are described in the accompanying claims. Specific embodiments of the invention are set forth in the dependent claims.

In an embodiment, noise in a homomorphic computation system is controlled. Before applying a second operation of the homomorphic computation system, an encrypted message for which the second operation is intended is first prepared. An encryption is searched with encrypts the same message as the encrypted message but which is expected to have better noise properties when the second operation is applied. A different encryption for the encrypted message may be obtained by applying a first homomorphic operation to the encrypted message and one or more homomorphic encryptions of a neutral element of the first operation. By applying the first homomorphic operation with various different neutral encryptions, multiple alternate encryptions of the same message can be generated.

A noise estimate is computed for the different encryptions of the encrypted message. The noise estimate provides a measure for the noise after the second operation has been applied to a candidate encryption. Finally, an encryption is selected with a low noise estimate. By preparing encrypted messages before using them the noise growth in the system can be reduced. This is advantageous for performance as well as for integrity.

The method to control noise in a homomorphic computation system is executed on an electronic device, e.g., a computer.

Embodiments described herein may be applied in a wide range of practical applications, in particular, in the context of homomorphic encryption. For example, embodiments may be used to obtain a more efficient bootstrapping.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of homomorphic system,
Figure 1b schematically shows an example of an embodiment of homomorphic system,
Figure 2a schematically shows an example of an embodiment of a system to control noise in a homomorphic computation system,
Figure 2b schematically shows an example of an embodiment of a homomorphic computation system,
Figure 3a schematically shows an example of an embodiment of obtaining a plurality of different encryptions of an encrypted message,
Figure 3b schematically shows an example of an embodiment of obtaining a plurality of different encryptions of an encrypted message,
Figure 3c schematically shows an example of an embodiment of obtaining a plurality of different encryptions of an encrypted message,
Figure 4 schematically shows an example of an embodiment of method to control noise in a homomorphic encryption system,
Figure 5a schematically shows a computer readable medium having a writable part comprising a computer program according to an embodiment,
Figure 5b schematically shows a representation of a processor system according to an embodiment.

## Reference signs list

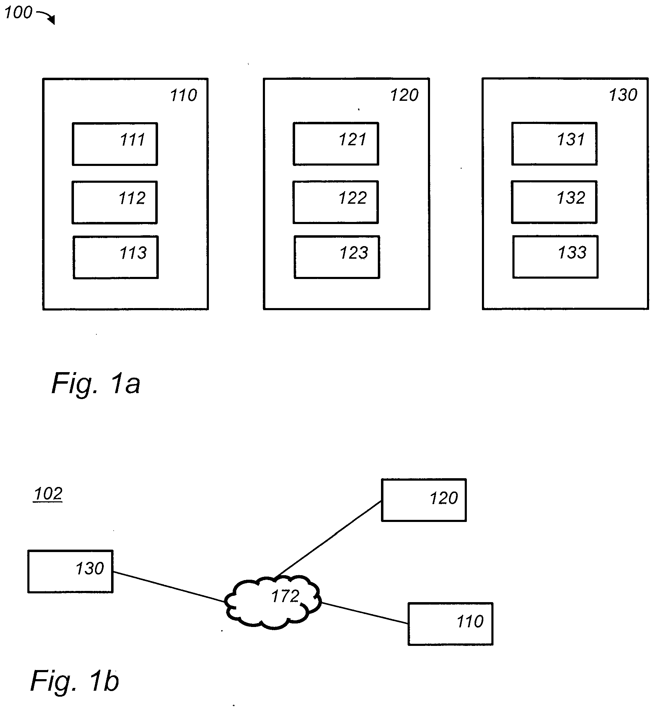

The following list of references and abbreviations corresponds to Figures 1-3c and 5a-5b and is provided for facilitating the interpretation of the drawings and shall not be construed as limiting the claims.

100, 102 a homomorphic system
110 a preparing system for preparing an encrypted message for a homomorphic computation system to control noise,

120 a homomorphic computation system
130 a user system
111 a processor system
112 a storage
113 a communication interface
121 a processor system
122 a storage
123 a communication interface
131 a processor system
132 a storage
133 a communication interface
172 a computer network
200 a preparing system to control noise in a homomorphic computation system
201 a homomorphic computation system
210 an encrypted message
220 one or more different homomorphic encryptions of the neutral element
221-223 a homomorphic encryption of the neutral element
230 a computation unit for obtaining a plurality of different encryptions of the encrypted message
240 a plurality of different encryptions of the encrypted message
241-243 a different encryption of the encrypted message
250 an evaluation unit for computing noise estimates
260 a selection unit
261 a selected encryption
270 a second operation
271 an operation result
310 a first homomorphic operation
301, 302 a different encryption of the encrypted message
303 a different encryption of the encrypted message
321 a homomorphic encryption of the neutral element
400 a method to control noise
410 obtaining of an encrypted message
420 obtaining of one or more different homomorphic encryptions
430 preparing for performing the second operation
431 obtaining of a plurality of different encryptions
432 computing a noise estimate
433 selecting an encryption
440 performing the second operation
1000, 1001 a computer readable medium
1010 a writable part
1020 a computer program
1110 integrated circuit(s)
1120 a processing unit
1122 a memory
1124 a dedicated integrated circuit
1126 a communication element
1130 an interconnect
1140 a processor system

**DESCRIPTION OF EMBODIMENTS**

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.
In the following, for the sake of understanding, elements of embodiments are described in operation. However, it will be apparent that the respective elements are arranged to perform the functions being described as performed by them.
Further, the subject matter that is presently disclosed is not limited to the embodiments only, but also includes every other combination of features described herein or recited in mutually different dependent claims.

**Figure 1a** schematically shows an example of an embodiment of a homomorphic system, comprising a preparing system 110, a homomorphic computation system 120, and a user system 130.

User system 130 is configured to provide encrypted data, typically by encrypting the data itself, to homomorphic computation system 120. Homomorphic computation system 120 is configured to perform computation on the encrypted data. Being a homomorphic system, the computations are performed directly on the encrypted data, without homomorphic computation system 120 ever gaining access to the plain data, whether input data, intermediate data, or output data. User system 130 and computation system 120 both work with the same homomorphic encryption scheme, or homomorphic encryption system. Many such systems are known, some of which are further discussed herein.

User system 130 may provide auxiliary key material of various kinds to support homomorphic computation system 120, e.g., key switching keys, and the like, depending on the exact homomorphic system that is being used.

Preparing system 110 is configured to prepare homomorphically encrypted data before it is processed by the homomorphic computation system, e.g., before homomorphic operation, including conventional homomorphic operations, are performed thereon. A principal problem in homomorphic systems is the proliferation of noise. Noise is incorporated into encrypted text on purpose, to thwart linear attacks on the system. However, as homomorphic operations are performed, noise increases. Although homomorphic computation systems typically have access to a so-called bootstrapping operation-which reduces the noise, e.g., back to manageable levels-such a bootstrap is a computationally expensive operation. There is thus a need to prevent the increase of noise if possible.

Before the homomorphic computation system operates on homomorphically encrypted data, whether input data or intermediate data, the preparing system can replace the encrypted data with a different encryption that, although different, still represents the same plaintext. The different encryption is selected such that noise develops more favorably, either with certainty or at least with high probability.

Additional noise increase, sometimes referred to as drift, can be particularly large in modulus switching operations, e.g., an operation in which digits of an encryption are converted to a different modulus, e.g., from a modulus $q$ to a modulus $2N$. Modulus switching operations are commonly used to prepare for programmable bootstraps. By reducing noise increase during the modulus switch, a bootstrap, or programmable bootstrap, may be postponed, if only for an additional operation. Note that preparing system does not remove noise from an encryption, but selects another encryption, which although different, encrypts the same plaintext. Although many ciphertexts are equivalent in the sense that they encrypt the same plaintext, the noise increase caused by a next operation can vary wildly. By careful selection of such a different encryption, noise increase in a next operation can be reduced. Note that preparing system 120 operates homomorphically, that is, without access to the plaintext.

Typically, preparing system 110 and computation system 120 are integrated into one system. For example, preparing system 110 may be a subsystem of computation system 120.

Preparing system 110 may comprise a processor system 111, a storage 112, and a communication interface 113. Homomorphic computation system 120 may comprise a processor system 121, a storage 122, and a communication interface 123. User system 130 may comprise a processor system 131, a storage 132, and a communication interface 133.

In the various embodiments of communication interfaces 113, 123, and/or 133, the communication interfaces may be selected from various alternatives. For example, the interface may be a network interface to a local or wide area network, e.g., the Internet, a storage interface to an internal or external data storage, an application interface (API), etc.

Storage 112, 122, and 132 may be, e.g., electronic storage, magnetic storage, etc. The storage may comprise local storage, e.g., a local hard drive or electronic memory. Storage 112, 122, and 132 may comprise non-local storage, e.g., cloud storage. In the latter case, storage 112, 122, and 132 may comprise a storage interface to the non-local storage. Storage may comprise multiple discrete sub-storages together making up storage 112, 122, and 132.

Storage 112, 122, and 132 may be non-transitory storage. For example, storage 112, 122, and 132 may store data in the presence of power such as a volatile memory device, e.g., a Random Access Memory (RAM). For example, storage 112, 122, and 132 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

The systems 110, 120, and 130 may communicate internally, with each other, with other systems, external storage, input devices, output devices, and/or one or more sensors over a computer network, The computer network may be an internet, an intranet, a LAN, a WLAN, a WAN, etc. The computer network may be the Internet. The systems 110, 120, and 130 may comprise a connection interface that is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G, or 5G antenna.

Preparing system 110 and computation system 120 may not have a need for communication over a network with each other, as they may well be implemented as part of a single software code, e.g., running on the same device, e.g., computer.

System 130 may be implemented on a single device, e.g., a computer. Preparing system 110 and computation system 120 may each be implemented on a single device, e.g., a computer.

The communication interface 113 may be used to send or receive digital data, e.g., an encrypted message for preparing, one or more different homomorphic encryptions of the neutral element which may be used in the preparing process, and an alternate encryption selected for favorable noise development properties.

The communication interface 123 may be used to send or receive digital data, e.g., an encrypted message, selected message. Possibly, the encryption of the neutral element may be provided to the preparing system 110 via computation system 120. Computation system 120 will typically receive homomorphically encrypted data from client system 130 and send computation results back to client system 130. Such computation results are still homomorphically encrypted. Client system 130 may decrypt such messages by virtue of the fact that client system 130 has access to the encryption key (or decryption key in case of a public/private encryption system being used).

The communication interface 133 may be used to send or receive digital data, e.g., encrypted data for use in the homomorphic computation, encryption of the neutral element, and encrypted computation results.

Preparing system 110, homomorphic computation system 120, and user system 130 may have a user interface, which may include well-known elements such as one or more buttons, a keyboard, display, touch screen, etc. The user interface may be arranged for accommodating user interaction for performing a homomorphic encryption.

The communication interface 123 may be used to communicate with other homomorphic computation systems.

The execution of systems 110, 120, and 130 may be implemented in a processor system. The systems 110, 120, and 130 may comprise functional units to implement aspects of embodiments. The functional units may be part of the processor system. For example, functional units shown herein may be wholly or partially implemented in computer instructions that are stored in a storage of the system and executable by the processor system.

The processor system may comprise one or more processor circuits, e.g., microprocessors, CPUs, GPUs, etc. Systems 110, 120, and 130 may comprise multiple processors. A processor circuit may be implemented in a distributed fashion, e.g., as multiple sub-processor circuits. For example, systems 110, 120, and 130 may use cloud computing.

Typically, preparing system 110, homomorphic computation system 120, and user system 130 each comprise one or more microprocessors which execute appropriate software stored at the system; for example, that software may have been downloaded and/or stored in a corresponding memory, e.g., a volatile memory such as RAM or a non-volatile memory such as Flash.

Instead of using software to implement a function, the systems 110, 120, and/or 130 may, in whole or in part, be implemented in programmable logic, e.g., as field-programmable gate arrays (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, preparing system 110, homomorphic computation system 120, and user system 130 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the system.

**Figure 1b** schematically shows an example of an embodiment of a homomorphic system 102. System 102 may comprise multiple preparing systems; shown is preparing system 110. System 102 may comprise multiple homomorphic computation systems; shown is homomorphic computation system 120. System 100 may comprise multiple user systems; shown is user system 130.

The systems are connected through a computer network 172, e.g., the Internet. The preparing system 110 and homomorphic computation system 120 may be according to an embodiment.

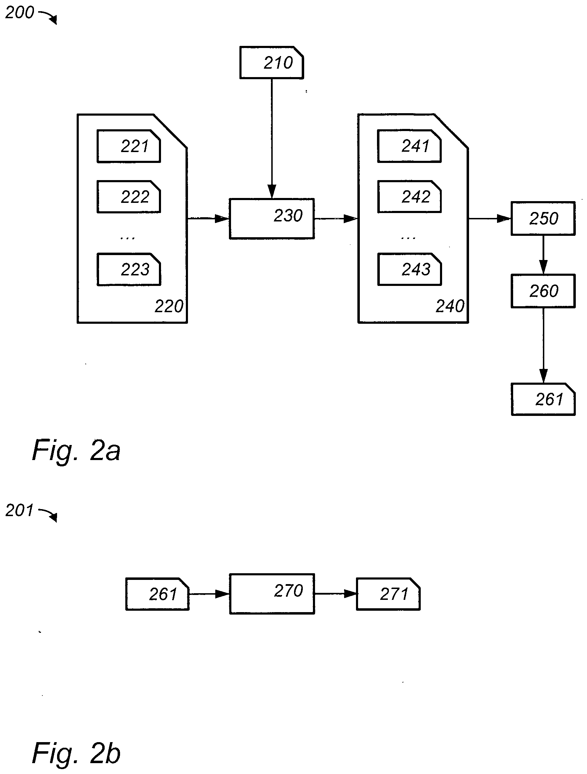

**Figure 2a** schematically shows an example of an embodiment of a preparing system 200 to control noise in a homomorphic computation system. For example, preparing system 200 may be implemented in a system such as preparing system 110.

Preparing system 200 is adapted to cooperate with a homomorphic computation system, such as homomorphic computation system 201 shown in Figure 2b. For example, computation system 201 may be implemented in a system such as preparing system 201.

Preparing system 200 and computation system 201 both process data that is encrypted according to a homomorphic encryption system, or homomorphic encryption scheme. For example, the homomorphic encryption system may support one or more operations such as encryption, decryption, bootstrapping, programmable bootstrapping, arithmetic operations, etc. Other operations that may be supported include modulus switching, key switching, linear operations, external products, cmux operations, and the like.

For example, the homomorphic encryption system may be one of: LWE, TFHE, NTRU, FHE, BGV, CKKS.

The homomorphic computation system supports evaluation of at least an operation referred to herein as the second operation, e.g., second operation 270 shown in Figure 2b. Preparing system 200 prepares an encrypted message, e.g., by replacing the encrypted message with an alternate encryption of the same message which has a better expected noise development when subjected to the second operation. How the alternate encryption is selected may depend on what the second operation is. This information may be communicated to the preparing system, e.g., from the computation system. In an embodiment, the preparing system may be configured for one particular second operation, e.g., one for which noise control is most pressing.

In an embodiment, the second operation is a unary operation. If the second operation operates on a single operand, then this makes selecting a suitable alternate encryption easier. In an embodiment, the second operation is key-independent. Key-independent operations do not require auxiliary key material, e.g., key switching keys or the like. This makes analysis of noise development easier and thus helps selection. The inventors found that a particularly good candidate for the second operation is a modulus switch, which is both unary and key-independent. A modulus switch moreover may cause a large noise increase, so is a good candidate for noise reduction. Nevertheless, the technology disclosed herein may be applied to non-unary, e.g., binary operations, and/or to key-dependent operations. Note that regardless of whether the second operation is keyed or unkeyed, in both situations no knowledge of the secret key of the user system is needed.

For example, a modulus switching operation may be used in a leveled fully homomorphic encryption scheme, including BFV, BGV, CKKS. Modulus switching operation are also used prior to a blind rotation in a bootstrapped fully homomorphic encryption scheme, including FHEW, TFHE, FINAL. If so desired, further conditions may be placed on the result of the modulus switch, For example, the modulus switching may be restricted to use values that are even, or odd, or more generally values that are 0 or 1 modulo a power of two, see, e.g., [LMK+23], and [WWL+24]. For example, a modulus switch could first scale the input value, then select the nearest integer that satisfies conditions for the modulus switch.

Another second operation is ciphertext compression, also known as clipping. In clipping, a first ciphertext is converted in a second ciphertext that encrypts the same value (or message) but using a smaller ring for the values in the ciphertext, e.g., in the mask and body of an LWE encrypted value. Ciphertext compression is advantageous, e.g., before transmitting or storing a ciphertext, as the amount of data is reduced. On the other hand, as the dimension of the ciphertext is reduced, the noise will increase. How much the noise will increase depends on the particular form of the input ciphertext. By generating alternate encryptions of the same message, a version of the ciphertexts can be found which has advantageous properties after clipping.

In addition to the second operation, the homomorphic computation system supports homomorphic evaluation of at least a first, binary, homomorphic operation, the first homomorphic operation having a neutral element. The first operation has the property that applying it to an encrypted message and an encryption of the neutral element produces an alternate encryption for the same plaintext.

For example, the first homomorphic operation may be addition, and the neutral element is zero. For example, the first homomorphic operation may be multiplication, and the neutral element is one. Preferably, the first operation is efficient. For example, in lattice-based systems, typically homomorphic additions are inexpensive to perform, especially compared to multiplication. On the other hand, in number theory-based systems, the opposite may be true. Other operations may be used, e.g., matrix addition/multiplication, xor operations, etc. For simplicity, we will assume the first operation is an addition, with the understanding that other examples are possible.

Note that homomorphic operations are typically performed in a ring, e.g., the integers modulo a modulus, a polynomials ring, etc.

Preparing system 200 is configured for obtaining an encrypted message 210. Encrypted message 210 may have been encrypted according to the homomorphic encryption system, using a secret key unknown to either preparing system 200 or computation system 201. If the homomorphic encryption system supports asymmetric encryption then encrypted message 210 may have been encrypted using a public key. The corresponding secret private is unknown to either preparing system 200 or computation system 201.

For example, encrypted message 210 may be input data, e.g., encrypted by a user system such as system 130; however, encrypted message 210 may be intermediate data, e.g., the result of performing a series of homomorphic operations resulting in encrypted message 210. Depending on the homomorphic encryption system used, the format of encrypted message 210 could be of various kinds, e.g., an LWE, GLWE, or GGSW message. Of particular importance are LWE messages, for example, if they are used as the input of a programmable bootstrap, and may thus need a modulus switching operation.

Preparing system 200 is configured for obtaining one or more different homomorphic encryptions of the neutral element 220. Shown are three different homomorphic encryptions of the neutral element: encryptions 221, 222, and 223. There could be fewer than 3 encryptions, e.g., as low as 1 encryption. We will refer to homomorphic encryptions of the neutral element as neutral encryptions.

Even with a single neutral encryption, e.g., an encryption of zero, multiple encryptions of the same plaintext may be obtained, and a choice may be made to improve noise development during the second operation, e.g., modulus switch. Typically, more than 3 encryptions of the neutral element will be obtained.

In an embodiment, the one or more different homomorphic encryptions of the neutral element 220 comprise at least 1, 2, 4, 16, 256, or 512 different encryptions. In a prototype, 256 different encryptions were used with excellent results; although with fewer encryptions still meaningful noise reduction is possible.

Obtaining more different encryptions of the neutral element is advantageous as it allows the creation of more alternate encryptions with lost noise increase incurred by the first operation, e.g., addition. On the other hand, obtaining more neutral element encryptions increases the auxiliary material that is produced, e.g., by the user system. To alleviate this issue, it is possible to use a smaller set of neutral element encryptions at the expense of a modest noise increase, as further discussed herein.

For example, neutral element encryptions 220 may be obtained from a user system that has access to an encryption key, and so can generate multiple encryptions of the neutral element.

Some homomorphic computation systems support randomized public-key encryption using a public key; see, e.g., the system described in [Rot11] and [Joy24]. In that case, preparing system 200 can generate one or more encryptions of the neutral element itself using the public encryption key. No neutral element encryptions are needed from the user system, although, if desired, the neutral element encryptions could be obtained in part from the user system and in part generated by preparing system 200 or even computation system 201.

Preparing system 200 is configured to prepare encrypted message 210 for subsequent processing in the second operation 270. The second operation will increase noise, possibly a lot, which is undesirable. By replacing encrypted message 210 with an alternate encryption that encrypts the same message but will, at least most likely, generate lower noise when processed in the second operation, this problem is alleviated.

Preparing system 200 is configured to obtain a plurality 240 of different encryptions of the encrypted message. Shown in Figure 2a are different encryptions 241, 242, and 243. There may be 2 encryptions, or more than 3. There may be more encryptions in plurality 240 than neutral encryptions in plurality 220. We will refer to a different encryption of the same plaintext as an alternate encryption.

For example, computation unit 230 may compute plurality 240 from neutral element encryption 220 and encrypted message 210. The inventors realized that combining encrypted message 210 with a neutral element through the first operation would result in an alternate encrypted message that encrypts the same message. For example, adding an encryption of the zero element, or multiplying with an encryption of the one element, can be used to achieve this. Plurality 240 may comprise encrypted message 210.

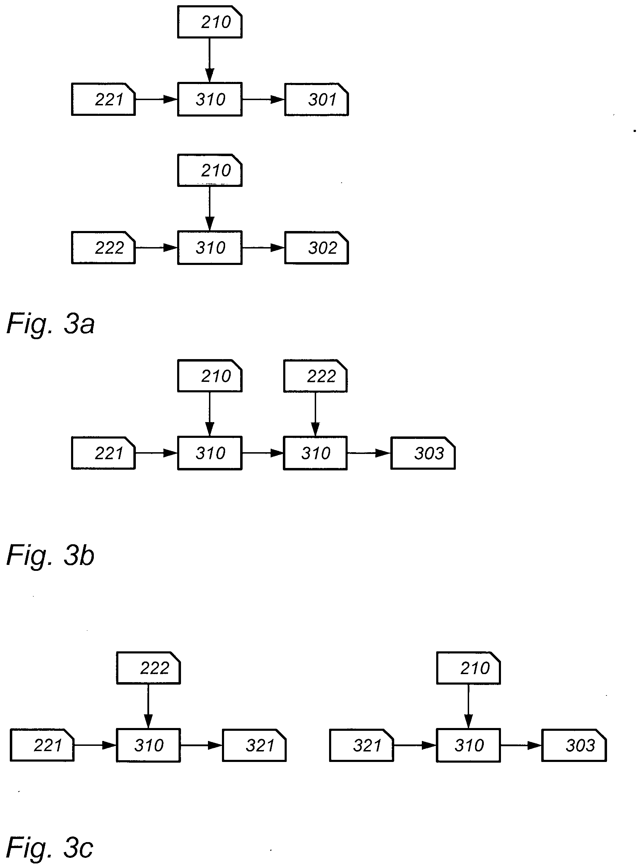

Preparing system 200 computes at least one alternate encryption of encrypted message 210 by applying the first homomorphic operation to the encrypted message and a neutral element encryption. Various options to do this are illustrated in Figures 3a-3c.

**Figure 3a** schematically shows an example of an embodiment of obtaining a plurality of different encryptions of an encrypted message, such as plurality 240. Figure 3a shows the first homomorphic operation 310. In this example, encrypted message 210 is combined with the encrypted neutral elements in turn; shown are elements 221 and 222, thus obtaining alternate encryptions 301 and 302, respectively. There may be more or fewer than two alternate encryptions computed by preparing system 200.

For example, encrypted message 210 could be combined with each of the obtained encrypted neutral elements or could terminate early if a suitable alternate encryption has been found.

It is possible, perhaps even likely, that the noise level in alternate encryptions 301 and 302 is slightly higher than in encrypted message 210. This is due to the fact that noise in the neutral encryption is added to the noise in encrypted message 210, likely making the noise worse. However, noise increase caused by computing these alternate encryptions is typically lower than the noise increase caused by the second operation. For example, addition in a lattice-based homomorphic encryption has low noise increase. As an illustration, if $e$ and $e'$ denote the respective noise in two LWE-type ciphertexts, the noise resulting from their addition is $e + e'$; the absolute value of which is bounded by $2\max(|e|, |e'|)$.; while the noise increase in the second operation would be larger, typically an order of magnitude larger.

Using the method of Figure 3a, one can compute as many alternate encryptions as there are neutral element encryptions available. Using at most a single application of first operation 310 has the advantage that noise increase in the alternate encryptions is small.

Instead of first operation 310, one could also use the inverse of the first operation. For example, instead of adding an encryption of zero, one can subtract an encryption of zero. Instead of multiplying with an encryption of one, one can divide by an encryption of one.

**Figure 3b** schematically shows an example of an embodiment of obtaining a plurality 240 of different encryptions of an encrypted message. Figure 3b shows that two neutral encryptions, neutral encryptions 221 and 222, are both combined with encrypted message 210. The result is a different encryption of the encrypted message 303. For example, by combining with two neutral elements, the number of alternate encryptions that can be obtained increases quadratically. Instead of combining with two neutral elements, more neutral elements may be used, e.g., three or more, four or more, etc. With each increase in the number of neutral elements used, the number of alternate encryptions that can be computed increases.

Figures 3a and 3b can be combined. For example, first encrypted message 210 may be combined with a single neutral encryption, as well as with two neutral encryptions. In this case, an efficient ordering of the operations can reduce operations. For example, to compute the combination of first encrypted message 210 with two neutral encryptions, one may start from the combination of first encrypted message 210 with a single neutral encryption. In this case, only one operation 310 is needed per alternate encryption even though the alternate encryption shown in Figure 3b incorporates two operations 310.

**Figure 3c** schematically shows an example of an embodiment of obtaining a plurality 240 of different encryptions of an encrypted message. In Figure 3c, combinations of multiple neutral encryptions are combined and stored. For example, neutral encryptions 221 and 222 may be combined to form a new neutral encryption 321. Neutral encryption 321 may be combined with encrypted message 210, but may later also be combined with another encrypted message that also needs preparing for a second operation.

The plurality comprises at least two elements, one of which may be the original encrypted message 210. In an embodiment, the plurality comprises at least 2, 4, 16, 256, or 512 alternate encryptions.

When combining with one or more neutral elements, a scalar multiplication may be applied to the neutral elements-for simplicity, we are here assuming the first operation is an addition. If the first operation is a multiplication, an exponentiation may be used instead of a scalar multiplication.

For example, given encrypted message $x$, neutral encryptions $n_1$, $n_2$, $n_3$, and may select scalars $\alpha_1$, $\alpha_2$, $\alpha_3$ and compute $x + \alpha_1 n_1 + \alpha_2 n_2 + \alpha_3 n_3$. The value $\alpha_1 n_1 + \alpha_2 n_2 + \alpha_3 n_3$ could be precomputed and stored as additional neutral encryptions. Instead of using 3 neutral encryptions, one could use 1, 2, or more than 3 neutral encryptions. The scalars $\alpha_1$, $\alpha_2$, $\alpha_3$ are preferably small in absolute value. For example, in an embodiment, the scalars are preferably at most 4 in absolute value, at most 2 in absolute value, and most preferably at most 1 in absolute value. For example, in an embodiment, neutral elements are added and subtracted, e.g., forming $x + n_1$, $x - n_1$, $x + n_1 + n_2$, $x + n_1 - n_2$, $x - n_1 - n_2$, $x - n_1 - n_2$, and so on.

There are various ways to generate alternate encryptions for encrypted message 210 by using various ways to select neutral encryptions to combine with encrypted message 210.

For example, in an embodiment, selection of neutral encryptions is randomized. The randomization may be true random or pseudorandom. Randomization has the advantage of reducing the attack surface of the system. Using pseudorandom selection has the further advantage that the computation can be reproduced if necessary. For example, if the computations are performed on a blockchain, then miners may need to reproduce the computation, which is possible for a pseudorandom selection using the same seed. A seed for the pseudorandom selection may be obtained, e.g., from encrypted message 210 itself, e.g., by hashing it to a seed; alternatively, a seed may be obtained from an auxiliary source, e.g., a header or the like.

The selection may be according to a predetermined order. For example, first one neutral encryption may be used, then all combinations of two neutral elements, and so on.

Returning to Figure 2a, preparing system 200 is configured to compute a noise estimate for at least two different encryptions of the same plaintext that is encrypted in encrypted message 210, that is, for plurality 240. The encryptions that are considered may or may not include the starting encryption 210. In an embodiment, at least two noise estimates are computed for at least two different encryptions. For example, preparing system 200 may comprise evaluation unit 250.

The noise estimate is a noise estimate for the noise that will be present after the second operation has been performed. Writing $f$ for the second operation, preparing system 200 may, for example, compute a noise estimate for $f(x)$, $f(x + n_1)$, $f(x + n_2)$, etc. The noise increase caused by adding the neutral element may be taken into account or may be neglected, as it is much smaller than the noise typically added by the second operation.

Further information on computing a noise estimate is disclosed herein. A noise estimate is also referred to as a quality test.

Using the noise estimates, a selection is made for an encryption from the plurality with a low noise estimate. For example, preparing system 200 may comprise a selection unit 260 for selecting an alternate encryption for encrypted message 250.

There are various ways to proceed to select an alternate encryption. For example, one approach is to compute the noise estimate as soon as the alternate encryption has been computed and decide on whether to select the alternate encryption before computing the next alternate encryption. For example, a possible pseudocode may be as follows:

```
input: encrypted _input_message
current_message = encrypted_input_message
while noise estimate for current_message is too high
        o = get_new_encrypted_neutral_element ()
        current_message = encrypted_input_message + o
        if too many trials, break
```

In this code, get_new_encrypted_neutral_element() is a function that obtains a new neutral encryption, e.g., by selecting one from plurality 220, and/or by combining previous neutral encryptions into a new one, and/or generating a neutral encryption. It may happen that this process fails, e.g., because the threshold for the noise estimate is too high. In that case, an error could be generated. Alternatively, the best encryption so far could be used. Another approach is to generate a fixed number of alternate encryptions and estimate noise for each of them. At that point, either the best one, e.g., the generated alternate encryption with the lowest noise estimate, may be taken, or a selection can be made from among the encryptions with the lowest noise estimates, e.g., from among the best three. The selection can be random.

Randomization may be introduced in the get_new_encrypted_neutral_element() For example, the function may select neutral encryptions according to a predetermined schedule, or may produce the selection randomly, e.g., true or pseudorandomly.

Once an alternate encryption 261 has been selected, it can be returned to computation system 201 for use in the second operation 270.

**Figure 2b** schematically shows an example of an embodiment of a homomorphic computation system. Shown is second operation 270. Second operation is applied to selected alternate encryption 261 rather than to encrypted message 210 to produce an operation result 271.

Returning to Figure 2a, various noise estimates can be used. Since preparing system 200 does not know the secret key that encrypts the alternate encryptions 240, it may not be possible to compute the exact noise that second operation 270 will produce. Nevertheless, a noise estimate can be given.

The noise estimates that are computed for the plurality of encryptions, e.g., alternate encryptions 240 as well as the received, original encryption, are preferably independent from a secret key encrypting the encrypted message.

In case of a symmetric encryption, the secret key is the same key used for encryption as used for decryption. That is knowledge of the secret key would allow one to encrypt, e.g., create a ciphertext, as well as decrypt, e.g., create a plaintext given a ciphertext. Being a homomorphic system, there is no public access to such a secret key. In case of an asymmetric encryption, the secret key may be the secret private key used for decryption. In such systems, the encryption key is typically public and not secret. In an embodiment, the noise estimate may well proceed without using the public encryption key, e.g., be independent of it, but this is not necessary. For example, in an embodiment in which an asymmetric homomorphic encryption is used, the noise estimate may use the public key, though not the corresponding secret private key.

Computing a noise estimate independent from a secret key means that no knowledge of the secret key, or access thereto, is used or needed to compute the noise estimate. The noise estimate estimates noise after the second operation has been applied.

Several types of noise estimates may be used.

A first option is an absolute worst-case bound. The noise estimate may be computed over a worst-case choice for a key under which the encrypted message is encrypted. This means that regardless of what the actual key is under which the encrypted message is encrypted and the alternate encryption 240, the noise after the second operation is certain to be smaller than the noise estimate. For example, such a noise estimate for an encryption may be computed from its digits, by assuming for each digit of the secret key the worst choice, that is, the choice with the worst contribution to the noise.

An alternative approach is to compute a probabilistic bound. In a probabilistic noise estimate, the noise after second operation 270 is, with high probability, smaller than the noise estimate, but not with certainty. A small probability that noise exceeds expectations is tolerated. For example, in an embodiment, the probability that noise in the result of applying the second operation to the selected element exceeds a maximum tolerated bound is less than a probability parameter. Preferably, the probability parameter is at most $2^{-64}$, $2^{-80}$, more preferably $2^{-128}$. The maximum tolerated bound depends on the application and the word length that is used.

There are several ways to compute a probabilistic worst-case bound. For example, in an embodiment, one can assume that the key was drawn randomly. Using a probabilistic analysis, a noise estimate can then be calculated. In an embodiment, a probabilistic noise estimate is computed from a distribution of the secret key digits.

One way to establish a noise estimate is to generate a set of random keys and compute the actual noise after the second operation, assuming in turn that each key of the set is the actual key. The keys in the set are drawn from the same key distribution as was used for the actual keys, e.g., uniformly random binary keys, ternary keys, and other distributions. For example, the set may comprise, say, 10 random keys or more, 100 random keys or more, etc. The advantage of this approach is that little probabilistic analysis is needed and is thus applicable to all systems.

In an embodiment, an encrypted message, including encrypted messages 210 and alternate encryptions 240, comprises multiple digits. For example, an LWE encryption comprises a mask and a body. The mask comprises multiple integers modulo a modulus, and the body comprises typically a single integer. A GLWE encryption is similar but uses polynomials with integer coefficients. We refer to the integers in the mask and body, possibly as the coefficients of the polynomials, as the digits.

More elaborate approaches compute the noise estimate directly from the digits in an encrypted message. For example, the probabilistic noise estimate may be computed from expected values of the secret key digits and their variance together with the known digits in the encrypted message.

Instead of a probabilistic noise estimate, another approach is to compute an absolute noise estimate or non-probabilistic noise estimate. In this case, there is certainty that the noise after applying the second operation is below a certain tolerated bound. An advantage of an absolute worst-case noise estimate is the certainty of the estimate. A disadvantage of probabilistic noise estimates is that they are by nature probabilistic and so may have some failure probability; the failure probability can however be made arbitrarily small. Accordingly, fewer computational resources are needed to find an alternate encryption with a satisfying probabilistic noise estimate than an alternate encryption with a satisfying absolute worst-case noise estimate.

To determine an absolute worst-case noise estimate, the noise in the second operation may be computed exactly. While this would normally require knowledge of the secret key, worst-case assumptions about the digits of the secret key are made, thus obtaining an absolute worst-case estimate.

For some homomorphic encryption systems, the noise after the second operation is actually key-independent and can be computed exactly without knowledge of the secret key. In such a case, the noise estimate could be exact. Even in such a case, one may opt to approximate the noise instead of calculating it exactly, thus computing a probabilistic noise estimate.

As noted, in a typical embodiment, the second operation is a unary operation. For a unary operation, it is easier to compute an alternate encryption with good noise properties than for a binary operation, as two alternate encryptions may have to be considered simultaneously, thus squaring the amount of work. Nevertheless, embodiments could be applied to binary operations or even to operations having two or more operands.

For example, in an embodiment, the second operation is a binary operation. A further encrypted message is obtained, and a further encryption with low noise is selected for the further encrypted message by applying the first operation to the further encrypted message. A noise estimate is computed for a pair of encryptions obtained for the encrypted message and the further encrypted message. A pair of encryptions, e.g., alternate encryptions, is selected based on the noise estimate. The second operation may be applied to the selected pair, e.g., to both the selected encryption and the selected further encryption.

Below several further optional refinements, details, and embodiments are illustrated.

This section reviews several concepts related to encryption and to homomorphic encryption in particular. Regev-type encryption [Reg09] also known as LWE-type encryption will be used as an example to illustrate the introduced concepts.

An encryption scheme may comprise three algorithms: a key generation algorithm, an encryption algorithm, and a decryption algorithm [KL07, Ch. 3]. The key generation algorithm takes as input a security parameter and outputs an encryption key and a private decryption key. The encryption key may be private or public [KL07, Ch. 10]. The encryption algorithm is a, typically probabilistic, algorithm that transforms a plaintext message into a ciphertext using the encryption key. The decryption algorithm makes use of the private key and recovers-with overwhelming probability-the message from a ciphertext that encrypts it. The probability that the decryption algorithm returns an incorrect message is referred to as the failure probability and is denoted $p_{\mathrm{err}}$. The encryption and decryption may be different, referred to as asymmetric, or equal, referred to as symmetric.

To illustrate these concepts, a variant of the Regev encryption scheme [Reg09] is referenced.

### Key generation

On input a security parameter, select positive integers $n$, $t$ and $q$ with $t$ dividing q, let $\Delta = q/t$, and define a discretized error distribution $\chi$ over $\mathbb{Z}$. Finally, sample uniformly at random a vector $\mathbf{s} = (s_1, \dots, s_n) \overset{\$}{\leftarrow} \{0,1\}^n$. That $t$ divides q is convenient, though not necessary.

### Encryption

The encryption of a message $m \in \mathbb{Z}/t\mathbb{Z}$ (viewed as an integer in $\{0, \dots, t - 1\}$) is given by $\mathbf{c} = (a_1, \dots, a_n, b) \in (\mathbb{Z}/q\mathbb{Z})^{n+1}$ with

$$\begin{cases} (a_1, \dots, a_n) \overset{\$}{\leftarrow} (\mathbb{Z}/q\mathbb{Z})^n \\ b = \sum_{j=1}^{n} a_j \, s_j + \Delta \, m + e \pmod{q} \end{cases}$$

where $e \in \mathbb{Z}$ is noise drawn randomly according to $\chi$.

### Decryption

To decrypt c = $(a_1, \dots, a_n, b)$, using s = $(s_1, \dots, s_n)$, return $\lfloor \mu^*/\Delta \rceil \bmod t$ where

$$\mu^* = b - \sum_{j=1}^{n} a_j \; s_j \;(\mathrm{mod} \; q) \,.$$

If the noise e present in **c** satisfies $|e| < \Delta/2$ then the decryption will be correct.

Typically, the error distribution $\chi$ used in LWE-type is a discretized or discrete version of the normal distribution $\mathcal{N}(0, \sigma^2)$ with mean 0 and (small) variance $\sigma^2$.

Example: LWE-type encryption is additively homomorphic

It can be verified that if **c** = $(a_1, \ldots, a_n, b)$ and **c'** = $(a'_1, \ldots, a'_n, b')$ denote the respective encryptions of messages $m$ and $m'$ then **c"** = **c** + **c'** = $(a_1 + a'_1, \ldots, a_n + a'_n, b + b')$ (mod q) is a valid encryption of (m + m') (mod t), provided that the resulting noise e" = e + e' satisfies $|e"| < \Delta/2$.

**Modulus switching and drift**

Modulus switching is a way to change the modulus defining the ciphertexts from $q$ to $q'$, via scaling and rounding. As explained in [BGV14], [CWCS14], this is a tool for noise management in leveled fully homomorphic encryption. Modulus switching is also a tool in bootstrapped fully homomorphic encryption as it is a key step for example prior to the blind rotation with the so-called AP method [AP14], [DM15] (incl. automorphism-based variants as for example in [BDF18], [LMK+23]) or the GINX method [GINX16], [CGGI20]. In both cases (leveled and bootstrapped), the challenge is to preserve correctness. The ciphertext modulo $q'$ should decrypt to the same plaintext as the initial ciphertext modulo $q$, or at least with high probability.

Another application to partially or fully homomorphic encryption of modulus switching are ciphertext compression methods. One such method (clipping) is described for example in [Joy23]. The challenge here is also to preserve correctness: the compressed ciphertext modulo $q'$ should permit the recovery of the original underlying plaintext using private key material (typically, the decryption key).

The drift vector is a vector comprising the scaling/rounding errors resulting from modulo switching ciphertext components modulo $q$ to modulo $q'$. The extra error term (that adds to the possibly noise already present in the input ciphertext c) resulting from the modulus switching is called the drift noise and is denoted $e_{\mathrm{drift}}$. This extra noise term is not necessarily a number, what typically matters is a measure on the noise term like for example its absolute value if it is a signed real value. Such a measure on the extra noise term is referred to as the noise magnitude.

Example: Mod-switching LWE-type ciphertexts

With the previous notations for LWE-type encryption, the ciphertext modulus is $q$. An LWE-type ciphertext modulo $q$, $\mathbf{c} = \left(a_1, \ldots, a_n, b = \sum_{j=1}^{n} a_j \; s_j + \Delta \, m + e\right) \in (\mathbb{Z}/q\mathbb{Z})^{n+1}$, encrypting a message m is converted to an LWE-type ciphertext modulo $q'$,

$$\tilde{\mathbf{c}} = \left(\tilde{a}_1, \ldots, \tilde{a}_n, \tilde{b}\right) \in (\mathbb{Z}/q'\mathbb{Z})^{n+1}$$

where

$$\begin{cases} \tilde{a}_j = \left\lceil \frac{a_j}{q} \, q' \right\rfloor \;(\mathrm{mod} \; q') & (\text{for } 1 \le j \le n) \\ \tilde{b} = \left\lceil \frac{b}{q} \, q' \right\rfloor \;(\mathrm{mod} \; q') \end{cases} .$$

Assume for simplicity that $q'$ divides $q$. The drift vector is given by $(\alpha_1, \ldots, \alpha_n, \beta) \in \mathbb{Z}^{n+1}$ and the drift noise is given by $e_{\mathrm{drift}} = \beta - \sum_{j=1}^{n} \alpha_j \; s_j \in \mathbb{Z}$, writing

$$
\begin{cases}
\alpha_j = \tilde{a}_j \, \dfrac{q}{q'} - a_j & \text{for some } \alpha_j \in \left[\!\!\left[ -\dfrac{q}{2q'}, \dfrac{q}{2q'} \right]\!\!\right] \\[2mm]
\beta = \tilde{b} \, \dfrac{q}{q'} - b & \text{for some } \beta \in \left[\!\!\left[ -\dfrac{q}{2q'}, \dfrac{q}{2q'} \right]\!\!\right]
\end{cases}.
$$

Indeed, letting $\Delta' = q'/t$, it can be verified that

$$
\frac{q}{q'} \, [(\tilde{b} - \sum_{j=1}^{n} \tilde{a}_j \, s_j - \Delta' m) \bmod q']
$$
$$
\equiv \beta + b - \sum_{j=1}^{n} (\alpha_j + a_j) \, s_j - \Delta \, m \ (\bmod \ q)
$$
$$
= e + e_{\text{drift}} \ .
$$

The mod-switched ciphertext $\tilde{c}$ correctly decrypts to m, provided that $|e + e_{\text{drift}}| < \Delta/2$.

**Semantic security**

IND-CPA security (or indistinguishability under chosen-plaintext attacks) is the standard security notion for homomorphic encryption schemes.

Basically, indistinguishability says that an adversary that chooses two (equal-length) messages $m_0^*$ and $m_1^*$ and receives an encryption of one of the two cannot tell with probability non-negligibly larger than 1/2 which one it is encrypting, that is $m_0^*$ or $m_1^*$. Indistinguishability of encryptions captures a strong form of data-privacy: The adversary should not learn any information whatsoever about a plaintext message given its encryption beyond the length of the message. This is also known as semantic security [GM84].

CPA stands for chosen-plaintext attacks; IND-CPA security means that an adversary cannot distinguish between the encryptions of $m_0^*$ and $m_1^*$ even if it is given access to an encryption oracle that returns an encryption for any chosen plaintext.

Example: LWE-type encryption is IND-CPA secure

The Regev encryption is known to be IND-CPA secure under the Learning with Errors (LWE) assumption [Reg09].

It should be noted that homomorphic encryption schemes cannot meet the stronger security notion of indistinguishability of encryptions under (adaptive) chosen-ciphertext attacks [KL07, Sect. 3.7], usually referred to with the acronym IND-CCA. In such an attack scenario, the adversary gets also access to a decryption oracle; the sole restriction is to not query the received challenge ciphertext, that is, the encryption of $m_0^*$ or $m_1^*$, for decryption. IND-CCA security is the notion usually retained for regular, non-homomorphic, encryption schemes.

Example: LWE-type encryption is not IND-CCA secure

Let c* denote the received challenge ciphertext. The adversary chooses a random message $r \in \mathbb{Z}/t\mathbb{Z}$ and queries the encryption oracle to get an encryption of *r,* say c'. The adversary forms the ciphertext c" = c* + c', submits it the decryption oracle, and gets back the corresponding cleartext, say *m"*. If $m'' - r = m_0^* \ (\bmod \ t)$ then the adversary guesses that c* is an encryption of $m_0^*$, and of $m_1^*$ otherwise.

This clearly shows the insecurity of LWE-type encryption with regard to chosen-ciphertext attacks.

**Beyond IND-CPA security for homomorphic encryption**

IND-CPAD [LM21] (or indistinguishability under chosen-plaintext attacks with a decryption oracle) strengthens the usual IND-CPA security notion for homomorphic encryption schemes. In the IND-CPAD model, the adversary gets in addition access to a decryption oracle-the adversary is however severely restricted to the type of decryption queries. More specifically, only ciphertexts for which the corresponding plaintext is known to the adversary can be submitted to the decryption oracle. This includes honestly generated ciphertexts by the adversary, and ciphertexts resulting from the evaluation of a chosen circuit on input ciphertexts whose matching plaintexts are known to the adversary.

**Notations**

The following notations are used. The ring of integers is denoted by $\mathbb{Z}$ and $[\![a, b]\!]$ represents the set of integers $x$ such that $a \leq x \leq b$. For a positive integer $q$, $\mathbb{Z}/q\mathbb{Z}$ represents the ring of integers modulo q. The real torus is denoted by $\mathbb{T}$ and is defined as $\mathbb{R}/\mathbb{Z}$ where $\mathbb{R}$ is the field of real numbers. For a positive integer $q$, $\mathbb{T}_q$ designates the discretized torus modulo $q$ and is defined as $\frac{1}{q}\mathbb{Z}/\mathbb{Z}$. For a real number $x$, $\lfloor x \rceil$ designates the rounding to the nearest integer (with some convention being taken in the case of a tie). For a fraction $n/d$ where $n$ is an integer modulo $q$ and $d$ is an integer, the notation $\lfloor n/d \rceil$ or $\left\lfloor \frac{n \,(\mathrm{mod}\ q)}{d} \right\rceil$ is understood as a lifting of $n \in \mathbb{Z}/q\mathbb{Z}$ to an integer $n \in \mathbb{Z}$; typically, as an integer representative that has the smallest absolute value. The notation $\lfloor \cdot \rceil$ naturally generalizes to polynomials or vectors of polynomials, in which case it is applied to each coefficient. The notation $x \xleftarrow{\$} \mathcal{S}$ means that variable $x$ is taken uniformly at random in set $\mathcal{S}$. For a real number $a$, $|a|$ denotes its absolute value. The notation $\|\cdot\|_\infty$ represents the infinity norm; for polynomials or vectors of polynomials, the infinity norm is taken coefficient-wise.

Additional notations will be introduced when needed.

As detailed earlier, the operation of modulus switching while central for enabling certain cryptographic techniques may invalidate the correctness of the decryption. Worse, it may also affect the security. For example, the authors of [CSBB24], [CCP+24] demonstrate attack scenarios wherein IND-CPA secure FHE schemes are not IND-CPAD secure in the presence of decryption failures. In particular, the authors of [CCP+24] even show that the knowledge of failing ciphertexts may be turned into a key recovery attack in the IND-CPAD model. Decryption failures may result from the extra drift noise following a modulus switching.

There is therefore a need to provide modulus switching methods that better contain the drift. A new modulus switching method and applications thereof is provided aiming at reducing the magnitude of the drift noise in the context of partially or fully homomorphic encryption.

Two important observations are in order:

First, a ciphertext produced by a partially or fully homomorphic encryption scheme can be transformed in another ciphertext encrypting the same plaintext, under the same scheme.

Second, modulus switching is a public operation, there are no secrets involved; in particular, the private key is not required. As a result, the drift vector can be publicly computed from the input ciphertext modulo q and the resulting mod-switched ciphertext modulo q'.

If the encryption scheme is additively homomorphic, another ciphertext of the same plaintext may be obtained by adding an encryption of 0. If the encryption scheme is multiplicatively homomorphic, one may instead multiply with an encryption of 1. For fully homomorphic encryption schemes, one may either add an encryption of 0 or multiply with an encryption of 1 to get another ciphertext encrypting the same plaintext. For example, the GSW encryption scheme [GSW13] is both additively homomorphic and multiplicatively homomorphic.

Suppose without loss of generality, an additively homomorphic encryption scheme and let $\boxplus$ (resp. $\cdot$) denote the ciphertext addition (resp. multiplication of a ciphertext by a scalar). The case of a multiplicatively homomorphic encryption scheme is treated similarly by replacing addition with encryptions of 0 by multiplication with encryptions of 1. A set of encryptions of 0, say Z encryptions of 0, may be provided as public parameters. The process of adding an encryption of 0 to transform a given ciphertext can be deterministic, random, or pseudo-random. Let $\mathbf{D}_1, \ldots, \mathbf{D}_Z$ denote Z ciphertexts encrypting 0, and let c denote the input ciphertext.

Deterministic process: For example, ciphertext c is transformed into **c** $\boxplus$ **D**$_i$, for $i$ = 1,2, ... , Z. If more transformations are needed, ciphertext can for example be transformed into **c** $\boxplus$ **D$_1$** $\boxplus$ **D$_i$**, for $i$ = 2, ..., $n$. And so on with **D$_2$**, **D$_3$**, ..., **D$_Z$**; next with **D$_1$** $\boxplus$ **D$_2$**, **D$_1$** $\boxplus$ **D$_3$**, ..., **D$_1$** $\boxplus$ **D$_z$**, and so on. There are numerous possible variants; what matters is to keep the deterministic nature of the process.

Random process: Ciphertext c is transformed into **c** $\boxplus$ **D$_i$** where i is chosen at random in {1, ... , Z}. More generally, ciphertext c is transformed by adding to it a random linear combination of **D$_1$**, ..., **D$_Z$**; specifically, c is replaced with **c** $\boxplus$ **R** where **R** = $\theta_1 \cdot$ **D$_1$** $\boxplus$ ... $\boxplus$ $\theta_Z \cdot$ **D$_Z$** and $\theta_1$, ... , $\theta_Z$ are (small) random scalars.

Pseudo-random process: This can be seen as a specialization of the previous case where a pseudo-random linear combination of **D$_1$**, ..., **D$_Z$** is taken (as opposed to a random one). This is typically obtained through a pseudo-random function applied to the input ciphertext and/or other public parameters; see e.g. [GGM86].

Different types of processes can of course be combined.

In the case of public-key encryption, encryptions of 0 can alternatively be obtained using the public encryption key; see for example [Rot11], [Joy24]. Again, the process of adding a so-obtained encryption of 0 can be deterministic, random, or pseudo-random.

In an embodiment, an input ciphertext modulo q is transformed into another ciphertext modulo q, for example by adding an encryption of 0 if the encryption scheme is additively homomorphic, using the above-described processes. The resulting ciphertext is then tested with a so-called quality test. While the ciphertext resulting from this transformation and the input ciphertext are both ciphertexts modulo q encrypting the same plaintext message, they do not necessarily lead to the same drift noise. The purpose of the quality test is to predict a measure on the expected drift noise, e.g., expected drift magnitude, of mod-switching a ciphertext, knowing the corresponding drift vector. Recall that the drift vector can be publicly computed and in particular does not require the private key-this however does not necessarily hold true for the drift.

Let T denote the maximum allowed bound on a certain measure of the drift noise. Three types of quality tests (or a combination thereof) may be used.

Probabilistic quality test: Such a quality test may be used when the drift depends on the private key. The ciphertext modulo q being tested is fixed, only the private key is unknown. A probabilistic quality test estimates a measure on the drift noise by running over the random choices of the private key for the fixed ciphertext being tested and associated drift vector. If the so-obtained measure is smaller than or equal to T, the test is declared successful. A probabilistic quality test may suffer for some inaccuracies on the measure of the drift noise, but this should occur with a probability that can be set to an arbitrarily small value; for example, with probability at most $p_{err}$.

Worst-case quality test: Such a quality test may also be used when the drift depends on the private key. A worst-case quality test estimates a measure on the drift noise by assuming the worst private key (regarding the incurred drift noise) for the fixed ciphertext being tested and associated drift vector. Worst-case means that the measure on the drift noise cannot be larger for another choice of the private key. In some sense, the test is therefore exact as when it is satisfied, the actual drift magnitude is guaranteed to be smaller than or equal to T, independently of the value of the private key.

Actual quality test: Such a quality test requires that the drift noise does not depend on the private key. In this case, the quality test computes the drift noise and a measure on it. It then checks that the computed measure is smaller than or equal to T.

In all cases, when the test fails, another candidate ciphertext modulo q may be tried.

An example of a possible implementation relying on the above two observations may now be given. The input is a ciphertext c modulo q and the output is a mod-switched ciphertext modulo $q'$ featuring a controlled drift noise. Encryptions **D$_1$**, ..., **D$_Z$** of 0 may be provided as auxiliary data.

Step 1: Obtain ciphertext c modulo q
Step 2: Set ciphertext c' = c
Step 3: On input ciphertext c' (modulo $q$), obtain the mod-switched ciphertext **c̃** (modulo $q'$)
Step 4: Estimate the corresponding drift noise using chosen quality test:
If the test fails:

- obtain an encryption **R** of 0 (modulo $q$) and compute ciphertext **c'** = **c** $\boxplus$ **R** (modulo q)
- goto Step 3

Step 5: Return ciphertext **c̃** (modulo $q'$)

Above example uses additive notation; the same can be done using multiplicative notation, taking 1 as the neutral element instead of 0. Also, it should be noted that the initial input ciphertext is first tested. A counter may also be used and the process stopped if too many candidates fail the quality test. Again, numerous variants are possible.

This section provides several embodiments. It should be noted that the described embodiments illustrate rather than limit the presently disclosed subject matter, and that those skilled in the art will be able to design many alternative embodiments.

**First embodiment**

Before presenting the first embodiment, it is useful to review basic concepts of probability theory and statistics. For a random variable X, the expected value or mean is denoted by IE[X] and its variance by Var(X). The variance is the expected value of the squared deviation from the mean.

The complementary error function, denoted by erfc, is calculated as

$$\mathrm{erfc}(x) = \frac{2}{\sqrt{\pi}} \int_x^\infty e^{-t^2} \, \mathrm{d}t \ .$$

It relates to the probability that a random variable X that is normally distributed with mean $\mu$ and standard deviation $\sigma$ does not lie in the interval $[\mu - r\sigma, \mu + r\sigma]$ for some non-negative parameter $r$. Parameter r is referred to as the interval parameter. More precisely, letting $p = \Pr[X \in [\mu - r\sigma, \mu + r\sigma]]$, one has

$$1 - p = \mathrm{erfc}\left(\frac{r}{\sqrt{2}}\right) \ .$$

The following table lists a number of values for $1 - p$ as a function of $r$.

| r | 1-p |
|---|---|
| 1 | 31.73% |
| 2 | 4.55% |
| 3 | 0.27% |
| ⋮ | ⋮ |
| 7.15 | $2^{-40}$ |
| 9.16 | $2^{-64}$ |
| 10.29 | $2^{-80}$ |
| 13.11 | $2^{-128}$ |
| 16.13 | $2^{-192}$ |

For large values of r, one can use the approximation

$$1 - p \approx \frac{e^{-r^2/2}}{r\sqrt{\pi/2}}.$$

An embodiment of a quality test may now be presented. For a fixed input LWE-type ciphertext c = $(a_1, ..., a_n, b)$ with associated drift vector $(\alpha_1, ..., \alpha_n, \beta)$, the corresponding drift noise is $e_{\mathrm{drift}} = \beta - \sum_{j=1}^n \alpha_j \, s_j$ . It is important to note that the ciphertext c is fixed. Over the random choices of the private key s = $(s_1, ..., s_n)$, the expectation and variance of the drift noise are given by

$$\mu \quad := \mathbb{E}[e_{\text{drift}}] \qquad\qquad \sigma^2 \quad := \text{Var}(e_{\text{drift}})$$

$$= \beta - \sum_{j=1}^{n} \alpha_j \, \mathbb{E}[s_j] \qquad \text{and} \qquad = \sum_{j=1}^{n} \alpha_j^2 \, \text{Var}(s_j) \cdot$$

For example, when s = $(s_1, ..., s_n)$ where the $s_j$'s are chosen uniformly at random in {0,1}, one has $\mathbb{E}[s_j] = \frac{1}{2}$ and $\text{Var}(s_j) = \frac{1}{4}$ and, consequently, $\mu = \beta - \frac{1}{2}\sum_{j=1}^{n} \alpha_j$ and $\sigma^2 = \frac{1}{4}\sum_{j=1}^{n} \alpha_j^2$. The drift noise in this case is a value in $\mathbb{Z}$. What matters is that it is not too large in absolute value. The relevant measure for the drift noise is therefore the absolute value.

Let T denote the bound on the maximum allowed drift noise (in absolute value). This gives rise to the following probabilistic quality test:

**Example: Quality test I**

Check whether

$$|\mu| + r\sigma \leq T$$

for a certain interval parameter r.

It should be noted that $|\mu| + r\sigma = \max(|\mu + r\sigma|, |\mu - r\sigma|)$. For example, assuming a normal distribution, the actual drift noise, e.g., the one obtained with the actual private key s, corresponding to a drift vector successfully passing this first quality test will lie in the interval $[\mu - r\sigma, \mu + r\sigma]$ ($\subseteq [-T, T]$) with probability $1 - \text{erfc}(r/\sqrt{2})$; for example, with probability at least 1 - $2^{-128}$ for any $r \geq 13.11$.

**Second embodiment**

The second embodiment considers the maximum drift noise for example a fixed input LWE-type c = $(a_1, ..., a_n, b)$ with associated drift vector $(\alpha_1, ..., \alpha_n, \beta)$ can have. Assume w.l.o.g. that the key digits $s_j$ are drawn in the integer range $[\![S^-, S^+]\!]$ where $S^- \leq 0$ and $S^+ > 0$. Since the drift noise $e_{\text{drift}} = \beta - \sum_{j=1}^{n} \alpha_j \, s_j$ is a signed value, two sub-cases can be distinguished:

maximally negative drift noise: when $s_j = S^+$ for $\alpha_j > 0$ and $s_j = S^-$ for $\alpha_j < 0$, one then has $e_{\text{drift}} = \beta - \Sigma_{\alpha_j>0} \alpha_j S^+ - \Sigma_{\alpha_j<0} \alpha_j S^-$;
maximally positive drift noise: when $s_j = S^-$ for $\alpha_j > 0$ and $s_j = S^+$ for $\alpha_j < 0$; one then has $e_{\text{drift}} = \beta - \Sigma_{\alpha_j>0} \alpha_j S^- - \Sigma_{\alpha_j>0} \alpha_j S^+$.

Hence, defining the sets $\mathfrak{I}^+ = \{j \in [\![1, n]\!] \mid \alpha_j > 0\}$ and $\mathfrak{I}^- = \{j \in [\![1, n]\!] \mid \alpha_j < 0\}$, the maximal drift noise in absolute value is bounded by

$$M = \max\left( \left| \beta - S^+ \sum_{j \in \mathfrak{I}^+} \alpha_j - S^- \sum_{j \in \mathfrak{I}^-} \alpha_j \right|, \right.$$
$$\left. \left| \beta - S^- \sum_{j \in \mathfrak{I}^+} \alpha_j - S^+ \sum_{j \in \mathfrak{I}^-} \alpha_j \right| \right).$$

For example, when s = $(s_1, ..., s_n)$ where the $s_j$'s are in {0,1}, we have $S^- = 0$ and $S^+ = 1$. The bound M simplifies to

$$M = \max\left( \left| \beta - \Sigma_{j \in \mathfrak{I}^+} \alpha_j \right|, \left| \beta - \Sigma_{j \in \mathfrak{I}^-} \alpha_j \right| \right).$$

Again, let T denote the bound on the maximum allowed drift magnitude. This yields the following worst-case quality test:

**Example: Quality test II**

Check whether

$$M \le T$$

where M is computed as described above.

This second quality test features that if it is successfully passed, the drift noise is guaranteed to be always below the maximum bound T, e.g., with probability 1, independently of the actual value of the private key s = $(s_1, ..., s_n)$. In this sense, this second quality test may be qualified as exact.

It is useful to first review some background on NTRU, introduced in [HPS98]. NTRU and its variants are additively homomorphic encryption schemes. Here is an illustration of one of them

On input a security parameter, the key generation algorithm

selects positive integers N and q with N a power of two and defines $\mathcal{R} = \mathbb{Z}[X]/\langle X^N + 1 \rangle$ and $\mathcal{R}_q = \mathcal{R}/q\mathcal{R}$; selects an integer $t$ with $t$ dividing q and lets $\Delta = q/t$;

defines a discretized error distribution $\chi$ over $\mathcal{R}$; typically, a discretized or discrete version of the normal distribution centered around 0 and with (small) variance;

samples a polynomial s $\in \mathcal{R}$ with coefficients in {-1,0,1} and such that s has an inverse in $\mathcal{R}_q$.

The encryption of a message m $\in \mathcal{R}/t\mathcal{R}$ (viewed as a polynomial with integer coefficients in {0, ..., $t$-1}) is given by $c = \frac{r}{s} + \Delta m + e \in \mathcal{R}_q$ where $r$ and $e$ respectively are a random polynomial and a random noise polynomial, both in $\mathcal{R}$ and drawn according to $\chi$. The decryption of ciphertext c uses private key s to recover the underlying plaintext in two steps as

compute $d = c\,s \in \mathcal{R}_q$ to get $r + s\,\Delta m + s\,e$;

compute $m^* = \left\lfloor \frac{d}{\Delta} \right\rceil \pmod{t}$ and return $\frac{m^*}{s} \in \mathcal{R}_t$.

Correctness requires $\|r + s\,e\|_\infty < \Delta/2$.

It can be verified that if ciphertexts c and c' in $\mathcal{R}_q$ respectively encrypt messages m and m' then $c'' = c + c'$ encrypts (m + m') (mod t). Here the public operation ⊞ is the addition of polynomials in $\mathcal{R}_q$.

Similar embodiments as above can be designed in the case of NTRU-type encryption. For simplicity, suppose again another modulus q' dividing q. An NTRU ciphertext modulo q, $c = \frac{r}{s} + \Delta m + e \in \mathcal{R}_q$, encrypting a message m is converted to an NTRU ciphertext modulo q',

$$\tilde{c} = \left\lfloor \frac{c}{q} q' \right\rceil \pmod{q'}$$

in $\mathcal{R}_{q'} = \mathcal{R}/q'\mathcal{R}$. The drift vector is a single element $\kappa \in \mathcal{R}$ and the drift noise is also $\kappa$. Indeed, letting $\Delta' = q'/t$, there exists some $\kappa \in \mathcal{R}$ such that $\kappa = \tilde{c}\frac{q}{q'} - c$ is a polynomial with coefficients in $\left[\!\left[ -\frac{q}{2q'}, \frac{q}{2q'} \right]\!\right]$, and so

$$\frac{q}{q'}[(\tilde{c}\,s - \Delta' m\,s) \bmod q'] \equiv \kappa\,s + c\,s - \Delta m \pmod{q}$$
$$= r + s\,(e + e_{\text{drift}}).$$

The input noise e and the drift noise $e_{\text{drift}}$ are polynomials. It should be noted that the computation of the drift noise does not involve the private key s, $\kappa \doteq \tilde{c}\,\dfrac{q}{q'} - c$ .

Embodiments find numerous applications in cryptography; in particular, in the context of homomorphic encryption. For example, the proposed modulus switching operation applies to all major FHE encryption schemes. The modulus switching operation is an important tool for noise management in leveled fully homomorphic encryption schemes, including BFV [Bra12], [FV12], BGV [BGV14], CKKS [CKKS17], and their variants. It is also an important tool in bootstrapped fully homomorphic encryption schemes as a key step prior to the blind rotation, including FHEW [DM15], TFHE [CGGI20], FINAL [BIP+22], and their variants. LWE-type encryption may also be replaced by LWR-type encryption, where LWR stands for Learning with Rounding [BPR12], which can be seen as a variant of LWE where the noise is deterministically generated.

Another example of an application is ciphertext compression. It should be noted that a smaller drift noise yields a better compression rate. Embodiments offer methods to better control the magnitude of the drift noise.

Yet another example of application is when the modulus switching operation imposes extra conditions, like rounding/scaling to values that are zero or odd as for some techniques in [LMK+23], or more generally to values that are zero or congruent to 1 modulo some power of two as in [WWL+24]. Adding an encryption of zero may present the benefit that the resulting encryption comprises more elements that already satisfy these extra conditions with the regular rounding/scaling.

Various embodiments are illustrated with the usual rounding function, namely, rounding to the nearest integer value, with some convention in the case of a tie, for the modulus switching operation. This should not be seen as a limitation. The described techniques readily adapt to any rounding function, including the flooring operation, usually denoted with the $\lfloor \cdot \rfloor$ operator, and the ceiling operation, usually denoted with the $\lceil \cdot \rceil$ operator. Those skilled in the art will be able to design several adaptations.

The following references provide further detail on homomorphic encryption and computation and are included herein by reference.

**References**

[AP14] J. Alperin-Sheriff and C. Peikert, "Faster bootstrapping with polynomial error," in Advances in Cryptology - CRYPTO 2014, part I, J. A. Garay and R. Gennaro, Eds., in Lecture notes in computer science, vol. 8616. Springer, 2014, pp. 297-314. doi: 10.1007/978-3-662-44371-2_17

[BDF18] G. Bonnoron, L. Ducas, and M. Fillinger, "Large FHE gates from tensored homomorphic accumulator," in Progress in Cryptology - AFRICACRYPT 2018, A. Joux, A. Nitaj, and T. Rachidi, Eds., in Lecture notes in computer science, vol. 10831. Springer, 2018, pp. 217-251. doi: 10.1007/978-3-319-89339-6_13

[BGV14] Z. Brakerski, C. Gentry, and V. Vaikuntanathan, "(Leveled) fully homomorphic encryption without bootstrapping," ACM Transactions on Computation Theory, vol. 6, no. 3, pp. 13:1-13:36, 2014, doi: 10.1145/2633600

[BIP+22] C. Bonte, I. Iliashenko, J. Park, H. V. L. Pereira, and N. P. Smart, "FINAL: Faster FHE instantiated with NTRU and LWE," in Advances in Cryptology - ASIACRYPT 2022, part II, S. Agrawal and D. Lin, Eds., in Lecture notes in computer science, vol. 13792. Springer, 2022, pp. 188-215. doi: 10.1007/978-3-031-22966-4_7

[BPR12] A. Banerjee, C. Peikert, and A. Rosen, "Pseudorandom functions and lattices," in Advances in Cryptology - EUROCRYPT 2012, D. Pointcheval and T. Johansson, Eds., in Lecture notes in computer science, vol. 723, Springer, 2012, pp. 719-737. Springer. doi: 10.1007/978-3-642-29011-4_42

[Bra12] Z. Brakerski, "Fully homomorphic encryption without modulus switching from classical GapSVP," in Advances in Cryptology - CRYPTO 2012, R. Safavi-Naini and R. Canetti, Eds., in Lecture notes in computer science, vol. 7417. Springer, 2012, pp. 868-886. doi: 10.1007/978-3-642-32009-5_50

[CCP+24] J. H. Cheon, H. Choe, A. Passelègue, D. Stehlé, and E. Suvanto, "Attacks against the INDCPA-D security of exact FHE schemes." Cryptology ePrint Archive, Report 2024/127, 2024.

[CGGI20] I. Chilotti, N. Gama, M. Georgieva, and M. Izabachène, "TFHE: Fast fully homomorphic encryption over the torus," Journal of Cryptology, vol. 33, no. 1, pp. 34-91, 2020, doi: 10.1007/s00145-019-09319-x

[CJP21] I. Chillotti, M. Joye, and P. Paillier, "Programmable bootstrapping enables efficient homomorphic inference of deep neural networks," in Cyber Security Cryptography and Machine Learning (CSCML 2021), S. Dolev and others, Eds., in Lecture notes in computer science, vol. 12716. Springer, 2021, pp. 1-19. doi: 10.1007/978-3-030-78086-9_1

[CKKS17] J. H. Cheon, A. Kim, M. Kim, and Y. S. Song, "Homomorphic encryption for arithmetic of approximate numbers," in Advances in Cryptology - ASIACRYPT 2017, part I, T. Takagi and T. Peyrin, Eds., in Lecture notes in computer science, vol. 10624. Springer, 2017, pp. 409-437. doi: 10.1007/978-3-319-70694-8_15

[CSBB24] M. Checri, R. Sirdey, A. Boudguiga, and J.-P. Bultel, "On the practical CPAD security of 'exact' and threshold FHE schemes and libraries." Cryptology ePrint Archive, Report 2024/116, 2024.

[CWCS14] Z. Chen, J. Wang, L. Chen, and X. Song, "A Regev-type fully homomorphic encryption scheme using modulus switching," The Scientific Journal, vol. 14, Article ID 983862, 2014, doi: 10.1155/2014/983862

[DM15] L. Ducas and D. Micciancio, "FHEW: Bootstrapping homomorphic encryption in less than a second," in Advances in Cryptology - EUROCRYPT 2015, part I, E. Oswald and M. Fischlin, Eds., in Lecture notes in computer science, vol. 9056. Springer, 2015, pp. 617-640. doi: 10.1007/978-3-662-46800-5_24

[E1G85] T. ElGamal, "A public key cryptosystem and a signature scheme based on discrete logarithms," IEEE Transactions on Information Theory, vol. 31, no. 4, pp. 469-472, 1985, doi: 10.1109/TIT.1985.1057074

[FV12] J. Fan and F. Vercauteren, "Somewhat practical fully homomorphic encryption." Cryptology ePrint Archive, Report 2012/144, 2012.

[Gen10] C. Gentry, "Computing arbitrary functions of encrypted data," Communications of the ACM, vol. 53, no. 3, pp. 97-105, 2010, doi: 10.1145/1666420.1666444

[GGM86] O. Goldreich, S. Goldwasser, and S. Micali, "How to construct random functions," Journal of the ACM, vol. 33, no. 4, pp. 792-807, 1986. doi: 10.1145/6490.650

[GINX16] N. Gama, M. Izabachène, P. Q. Nguyen, and X. Xie, "Structural lattice reduction: Generalized worst-case to average-case reductions and homomorphic cryptosystems," in Advances in Cryptology - EUROCRYPT 2016, part II, M. Fischlin and J.-S. Coron, Eds., in Lecture notes in computer science, vol. 9666. Springer, 2016, pp. 528-558. doi: 10.1007/978-3-662-49896-5_19

[GM84] S. Goldwasser and S. Micali, "Probabilistic encryption," Journal of Computer System Science, vol. 28, no. 2, pp. 270-299, 1984. doi: 10.1016/0022-0000(84)90070-9

[GSW13] C. Gentry, A. Sahai, and B. Waters, "Homomorphic encryption from learning with errors: Conceptually-simpler, asymptotically-faster, attribute-based," in Advances in Cryptology - CRYPTO 2013, part I, R. Canetti and J. A. Garay, Eds., in Lecture Notes in Computer Science, vol. 8042. Springer, 2013, pp. 75-92. doi: 10.1007/978-3-642-40041-4_5.

[HPS98] J. Hoffstein, J. Pipher, and J. H. Silverman, "NTRU: A ring-based public key cryptosystem," in Algorithmic Number Theory - ANTS III, J. P. Buhler, Ed., in Lecture notes in computer science, vol. 1423. Springer, 1998, pp. 267-288. doi: 10.1007/BFb0054868

[Joy22] M. Joye, "SoK: Fully homomorphic encryption over the [discretized] torus," IACR Transactions on Cryptographic Hardware and Embedded Systems, vol. 2022, no. 4, pp. 661-692, 2022, doi: 10.46586/tches.v2022.i4.661-692

[Joy23] M. Joye, "Fully homomorphic cryptography with improved data item representation," Zama, European patent EP4049405, 2023.

[Joy24] M. Joye, " TFHE public-key encryption revisited," in Topics in Cryptology - CT-RSA 2024, E. Oswald, Ed., in Lecture notes in computer science, vol. 14643. Springer, 2024, pp. 277-291. doi: 10.1007/978-3-031-58868-6_11

[KL07] J. Katz and Y. Lindell, Introduction to modern cryptography. Chapman & Hall/CRC, 2007. doi: 10.120119781420010756

[LM21] B. Li and D. Micciancio, "On the security of homomorphic encryption on approximate numbers," in Advances in Cryptology - EUROCRYPT 2021, part I, A. Canteaut and F.-X. Standaert, Eds., in Lecture notes in computer science, vol. 12696. Springer, 2021, pp. 648-677. doi: 10.1007/978-3-030-77870-5_23

[LMK+23] Y. Lee et al., "Efficient FHEW bootstrapping with small evaluation keys, and application to threshold homomorphic encryption," in Advances in Cryptology - EUROCRYPT 2023, part III, C. Hazay and M. Stam, Eds., in Lecture notes in computer science, vol. 14006. Springer, 2023, pp. 227-256. doi: 10.1007/978-3-031-30620-4_8

[Pai99] P. Paillier, "Public-key cryptosystems based on composite degree residuosity classes," in Advances in Cryptology - EUROCRYPT 1999, J. Stern, Ed., in Lecture notes in computer science, vol. 1592. Springer, 1999, pp. 223-238. doi: 10.1007/3-540-48910-X_16

[RAD78] R. L. Rivest, L. Adleman, and M. L. Dertouzos, "On data banks and privacy homomorphisms," in Foundations of secure computation, R. A. DeMillo and others, Eds., Academic Press, 1978, pp. 169-179.

[Reg09] O. Regev, "On lattices, learning with errors, random linear codes, and cryptography," Journal of the ACM, vol. 56, no. 6, pp. 34:1-34:40, 2009. doi: 10.1145/1568318.1568324

[Rot11] R. Rothblum, "Homomorphic encryption: From private-key to public-key," in Theory of Cryptography (TCC 2011), Y. Ishai, Ed., in Lecture notes in computer science, vol. 6597. Springer, 2011, pp. 219-234. doi: 10.1007/978-3-642-19571-6_14.

[WWL+24] B. Xiang, J. Zhang, Y. Deng, Y. Dai, and D. Feng, "Fast blind rotation for bootstrapping FHEs," in Advances in Cryptology - CRYPTO 2023, part IV, H. Handschuh and A. Lysyanskaya, Eds., in Lecture notes in computer science, vol. 14084. Springer, 2023, pp. 3-36. doi: 10.1007/978-3-031-38551-3_1.

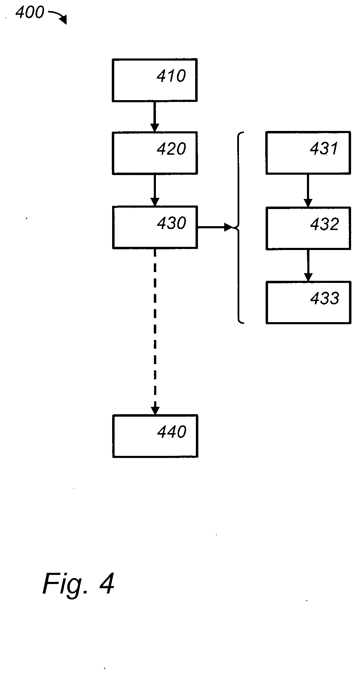

**Figure 4** schematically shows an example of an embodiment of method 400 to control noise in a homomorphic encryption system. Method 400 may be computer implemented. The homomorphic computation system supporting homomorphic evaluation of at least a first, binary, homomorphic operation, the first homomorphic operation having a neutral element, the homomorphic computation system supporting evaluation of at least a second operation. Method 400 comprises

- obtaining (410) an encrypted message (210), encrypted according to a homomorphic encryption system,
- obtaining (420) one or more different homomorphic encryptions of the neutral element (220),
- preparing (430) for performing the second operation on the encrypted message.

The preparing may comprise

- obtaining (431) a plurality of different encryptions of the encrypted message, comprising computing a different encryption of the encrypted message by applying the first homomorphic operation to the encrypted message and one or more of the one or more different homomorphic encryptions of the neutral element,
- for the encryptions in the plurality, computing (432) a noise estimate for a result of applying the second operation to the encryption, independent from a key under which the encrypted message is encrypted,
- selecting (433) an encryption from the plurality with a low noise estimate.

The selected encryption may then be used, e.g., as

- performing (440) the second operation on the selected encryption.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 400. Software may only include those steps taken by a particular sub-entity of the system. The software and/or other data according to an embodiment may be stored in a non-transitory storage medium, such as a hard disk, a floppy, a memory, an optical disc, read only memory, random access memory, CD-ROMs, magnetic tape, optical data storage devices, etc. Transitory signals and carrier waves are excluded from non-transitory media.

The software may be sent as a transitory signal along a wire, or wireless, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

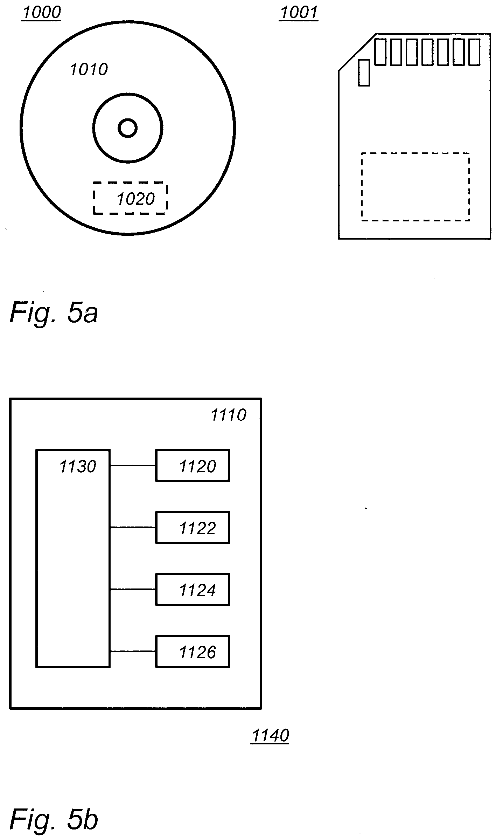

**Figure 5a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method to control noise, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method to control noise.

**Figure 5b** shows in a schematic representation of a processor system 1140 according to an embodiment. The processor system comprises one or more integrated circuits 1110. The architecture of the one or more integrated circuits 1110 is schematically shown in Figure 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., a device to prepare an encryption to control noise device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A cryptographic, computer-implemented method (400) to control noise in a homomorphic computation system, the homomorphic computation system supporting homomorphic evaluation of at least a first, binary, homomorphic operation, the first homomorphic operation having a neutral element, the homomorphic computation system supporting evaluation of at least a second operation, the method comprising

   - obtaining (410) an encrypted message (210), encrypted according to a homomorphic encryption system,
   - obtaining (420) one or more different homomorphic encryptions of the neutral element (220),
   - preparing (430) for performing the second operation on the encrypted message, the preparing comprising

      - obtaining (431) a plurality of different encryptions of the encrypted message, comprising computing a different encryption of the encrypted message by applying the first homomorphic operation to the encrypted message and one or more of the one or more different homomorphic encryptions of the neutral element,
      - for the encryptions in the plurality, computing (432) a noise estimate for a result of applying the second operation to the encryption, independent from a secret key encrypting the encrypted message,
- selecting (433) an encryption from the plurality with a low noise estimate,

- performing (440) the second operation on the selected encryption.

2. A method to control noise as in Claim 1, wherein

- the first homomorphic operation is an addition, and the neutral element is zero, and/or
- the first homomorphic operation is a multiplication, and the neutral element is one.

3. A method to control noise as in any one of the preceding claims, wherein

- the one or more different homomorphic encryptions of the neutral element, comprise at least 1, 2, 4, 16, 256, or 512 different encryptions, or
- the homomorphic computation system supports randomized public-key encryption using a public key different from the secret key, and obtaining the one or more different homomorphic encryptions of the neutral element comprises generating the encryptions using the public encryption key.

4. A method to control noise as in any one of the preceding claims, wherein computing the different encryptions of the encrypted message comprises

- applying the first homomorphic operation to the obtained encrypted message and one of the one or more different homomorphic encryptions of the neutral element.

5. A method to control noise as in any one of the preceding claims, wherein computing the different encryptions of the encrypted message comprises

- - selecting multiple of the one or more different homomorphic encryptions, and applying the first homomorphic operation to the obtained encrypted message and the selected multiple.

6. A method to control noise as in any one of the preceding claims, wherein computing the different encryptions of the encrypted message comprises

- selecting multiple of the one or more different homomorphic encryptions of the neutral element, multiplying at least part of the selected encryptions with a scalar, wherein the scalar is preferably at most 4 in absolute value, at most 2 in absolute value, most preferably at most 1 in absolute value.

7. A method to control noise as in Claim 5 or 6, wherein

- the selection is made randomly, and/or
- the selection is made accordingly to a predetermined selection schedule.

8. A method to control noise as in any one of the preceding claims, wherein the second operation is

- a unary operation, and/or
- a key-independent operation, and/or
- a modulus switch.

9. A method to control noise as in any one of the preceding claims, wherein an actual noise in the result is independent of the secret key.

10. A method to control noise as in any one of the preceding claims, wherein the noise estimate is a worst-case noise estimate.

11. A method to control noise as in any one of the preceding claims, wherein

- the noise estimate is probabilistic, wherein a probability that noise in the result of applying the second operation to the element exceeds the noise estimate is less than a probability parameter, preferably, the probability parameter is at most $2^{-64}$, $2^{-80}$, more preferably $2^{-128}$.

12. A method to control noise as Claim 11, the secret key having multiple secret key digits, wherein the probabilistic noise estimate is computed from a distribution of the secret key digits.

13. A method to control noise as Claim 11 or 12, wherein the probabilistic noise estimate is computed from expected values of the secret key digits and/or their variance.

14. A method to control noise as in any one of the preceding claims, the encrypted message comprising multiple digits, the estimate being computed from the digits.

15. A method to control noise as in any of the preceding claims, wherein the noise estimate is computed over the possible keys used to encrypt the encrypted message.

16. A method to control noise as in any of the preceding claims, wherein the noise estimate is computed over a worst-case choice for a secret key encrypting the encrypted message.

17. A method to control noise as in any of the preceding claims, wherein the noise in the result is key-independent, computing the noise estimate comprising computing the noise in the result of the second operation, or at least an estimation thereof.

18. A method to control noise as in any of the preceding claims, selecting the encryption from the plurality with a low noise estimate, comprises

    - selecting the first encryption obtained in the plurality having a noise estimate below a threshold, or
    - computing a predetermined number of encryption in the plurality, and selecting an encryption with a lowest noise estimate, and/or selecting randomly from among a set of encryptions in the plurality having the noise estimate below a threshold.

19. The method of any one of the preceding claims, wherein the second operation comprises:

    - a modulus switching operation in a leveled fully homomorphic encryption scheme, including BFV, BGV, CKKS, or
    - a modulus switching operation prior to a blind rotation in a bootstrapped fully homomorphic encryption scheme, including FHEW, TFHE, FINAL, or
    - a ciphertext compression, or
    - a modulus switching configured to round or scale to values that are 0 or 1 modulo a power of two.

20. A cryptographic system to control noise in a homomorphic computation system, the homomorphic computation system supporting homomorphic evaluation of at least a first, binary, homomorphic operation, the first homomorphic operation having a neutral element, the homomorphic computation system supporting evaluation of at least a second operation, the cryptographic system comprising one or more processors; and one or more storage devices storing instructions that, when executed by the one or more processors, cause the one or more processors to perform operations for

    - obtaining an encrypted message, encrypted according to the homomorphic encryption system,
    - obtaining one or more different homomorphic encryptions of the neutral element,
    - preparing for performing the second operation on the encrypted message, the preparing comprising

        - obtaining a plurality of different encryptions of the encrypted message, comprising computing a different encryption of the encrypted message by applying the first homomorphic operation to the encrypted message and one or more of the one or more different homomorphic encryptions of the neutral element,
        - for the encryptions in the plurality, computing a noise estimate for a result of applying the second operation to the encryption, independent from a secret key encrypting the encrypted message,
        - selecting an encryption from the plurality with a low noise estimate,

    - performing the second operation on the selected encryption.

21. One or more non-transitory computer-readable media and/or one or more transitory computer-readable media storing computer-executable instructions that, when executed by a computing system, cause the computing system to perform the method according to any one of claim 1-19.

*100*

```
┌──────────────────────┐   ┌──────────────────────┐   ┌──────────────────────┐
│                 110  │   │                 120  │   │                 130  │
│  ┌────────────────┐  │   │  ┌────────────────┐  │   │  ┌────────────────┐  │
│  │      111       │  │   │  │      121       │  │   │  │      131       │  │
│  └────────────────┘  │   │  └────────────────┘  │   │  └────────────────┘  │
│  ┌────────────────┐  │   │  ┌────────────────┐  │   │  ┌────────────────┐  │
│  │      112       │  │   │  │      122       │  │   │  │      132       │  │
│  └────────────────┘  │   │  └────────────────┘  │   │  └────────────────┘  │
│  ┌────────────────┐  │   │  ┌────────────────┐  │   │  ┌────────────────┐  │
│  │      113       │  │   │  │      123       │  │   │  │      133       │  │
│  └────────────────┘  │   │  └────────────────┘  │   │  └────────────────┘  │
└──────────────────────┘   └──────────────────────┘   └──────────────────────┘
```

*Fig. 1a*

102

```
┌──────────┐                                    ┌──────────┐
│    130   │                                    │    120   │
└──────────┘                                    └──────────┘
        \                                      /
         \         ╭────────╮                /
          \       (   172    )──────────────
                   ╰────────╯
                              \
                               \   ┌──────────┐
                                \  │    110   │
                                   └──────────┘
```

*Fig. 1b*

200

210

221

222

...

223

220

230

241

242

...

243

240

250

260

261

Fig. 2a

201

261 → 270 → 271

Fig. 2b

Fig. 3a

Fig. 3b

Fig. 3c

*Fig. 4*

_1000_ _1001_

_1010_

_1020_

Fig. 5a

_1110_

_1130_ _1120_

_1122_

_1124_

_1126_

_1140_

Fig. 5b

# EUROPEAN SEARCH REPORT

**Application Number**

EP 24 31 5450

## DOCUMENTS CONSIDERED TO BE RELEVANT

| Category | Citation of document with indication, where appropriate, of relevant passages | Relevant to claim |
|---|---|---|
| A | AKAVIA ADI ET AL: "Efficient Privacy-Preserving Viral Strain Classification via k-mer Signatures and FHE", 2023 IEEE 36TH COMPUTER SECURITY FOUNDATIONS SYMPOSIUM (CSF), IEEE, 10 July 2023 (2023-07-10), pages 489-504, XP034410491, DOI: 10.1109/CSF57540.2023.00012 [retrieved on 2023-08-28] * section VI * | 1-21 |

**CLASSIFICATION OF THE APPLICATION (IPC)**

INV.
H04L9/00
H04L9/30

**TECHNICAL FIELDS SEARCHED (IPC)**

H04L

The present search report has been drawn up for all claims

| Place of search | Date of completion of the search | Examiner |
|---|---|---|
| Munich | 17 March 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4049405 A, M. Joye

**Non-patent literature cited in the description**

- Faster bootstrapping with polynomial error. **J. ALPERIN-SHERIFF** ; **C. PEIKERT**. Advances in Cryptology - CRYPTO 2014. Springer, 2014, vol. 8616, 297-314
- Large FHE gates from tensored homomorphic accumulator. **G. BONNORON** ; **L. DUCAS** ; **M. FILLINGER**. Progress in Cryptology - AFRICACRYPT 2018. Springer, 2018, vol. 10831, 217-251
- **Z. BRAKERSK** ; **C. GENTRY** ; **V. VAIKUNTANATHAN**. Leveled) fully homomorphic encryption without bootstrapping. *ACM Transactions on Computation Theory*, 2014, vol. 6 (3), 13-1, 13-36
- FINAL: Faster FHE instantiated with NTRU and LWE. **C. BONTE** ; **I. ILIASHENKO** ; **J. PARK** ; **H. V. L. PEREIRA** ; **N. P. SMART**. Advances in Cryptology - ASIACRYPT 2022. Springer, 2022, vol. 13792, 188-215
- Pseudorandom functions and lattices. **A. BANERJEE** ; **C. PEIKERT** ; **A. ROSEN**. Advances in Cryptology - EUROCRYPT 2012. Springer, 2012, vol. 723, 719-737
- Fully homomorphic encryption without modulus switching from classical GapSVP. **Z. BRAKERSKI**. Advances in Cryptology - CRYPTO 2012. Springer, 2012, vol. 7417, 868-886
- **J. H. CHEON** ; **H. CHOE** ; **A. PASSELEGUE** ; **D. STEHLÉ** ; **E. SUVANTO**. Attacks against the INDCPA-D security of exact FHE schemes.. *Cryptology ePrint Archive*, 2024
- **I. CHILOTTI** ; **N. GAMA** ; **M. GEORGIEVA** ; **M. IZABACHÈNE**. TFHE: Fast fully homomorphic encryption over the torus. *Journal of Cryptology*, 2020, vol. 33 (1), 34-91
- Programmable bootstrapping enables efficient homomorphic inference of deep neural networks. **I. CHILLOTTI** ; **M. JOYE** ; **P. PAILLIER**. Cyber Security Cryptography and Machine Learning (CSCML 2021). Springer, 2021, vol. 12716, 1-19
- Homomorphic encryption for arithmetic of approximate numbers. **J. H. CHEON** ; **A. KIM** ; **M. KIM** ; **Y. S. SONG**. Advances in Cryptology - ASIACRYPT 2017. Springer, 2017, vol. 10624, 409-437

- **M. CHECRI** ; **R. SIRDEY** ; **A. BOUDGUIGA** ; **J.-P. BULTEL**. On the practical CPAD security of 'exact' and threshold FHE schemes and libraries.. *Cryptology ePrint Archive*, 2024
- **Z. CHEN** ; **J. WANG** ; **L. CHEN** ; **X. SONG**. A Regevtype fully homomorphic encryption scheme using modulus switching. *The Scientific Journal*, 2014, vol. 14
- FHEW: Bootstrapping homomorphic encryption in less than a second. **L. DUCAS** ; **D. MICCIANCIO**. Advances in Cryptology - EUROCRYPT 2015. Springer, 2015, vol. 9056, 617-640
- **T. ELGAMAL**. A public key cryptosystem and a signature scheme based on discrete logarithms. *IEEE Transactions on Information Theory*, 1985, vol. 31 (4), 469-472
- **J. FAN** ; **F. VERCAUTEREN**. Somewhat practical fully homomorphic encryption.. *Cryptology ePrint Archive*, 2012
- **C. GENTRY**. Computing arbitrary functions of encrypted data. *Communications of the ACM*, 2010, vol. 53 (3), 97-105
- **O. GOLDREICH** ; **S. GOLDWASSER** ; **S. MICALI**. How to construct random functions. *Journal of the ACM*, 1986, vol. 33 (4), 792-807
- Structural lattice reduction: Generalized worst-case to average-case reductions and homomorphic cryptosystems. **N. GAMA** ; **M. IZABACHÈNE** ; **P. Q. NGUYEN** ; **X. XIE**. Advances in Cryptology - EUROCRYPT 2016. Springer, 2016, vol. 9666, 528-558
- **S. GOLDWASSER** ; **S. MICALI**. Probabilistic encryption. *Journal of Computer System Science*, 1984, vol. 28 (2), 270-299
- Homomorphic encryption from learning with errors: Conceptually-simpler, asymptotically-faster, attribute-based. **C. GENTRY** ; **A. SAHAI** ; **B. WATERS**. Advances in Cryptology - CRYPTO 2013. Springer, 2013, vol. 8042, 75-92
- NTRU: A ring-based public key cryptosystem. **J. HOFFSTEIN** ; **J. PIPHER** ; **J. H. SILVERMAN**. Algorithmic Number Theory - ANTS III. Springer, 1998, vol. 1423, 267-288

- **M. JOYE**. SoK: Fully homomorphic encryption over the [discretized] torus. *IACR Transactions on Cryptographic Hardware and Embedded Systems*, 2022, vol. 2022 (4), 661-692
- TFHE public-key encryption revisited. **M. JOYE**. Topics in Cryptology - CT-RSA 2024. Springer, 2024, vol. 14643, 277-291
- **J. KATZ** ; **Y. LINDELL**. Introduction to modern cryptography. Chapman & Hall/CRC, 2007
- On the security of homomorphic encryption on approximate numbers. **B. LI** ; **D. MICCIANCIO**. Advances in Cryptology - EUROCRYPT 2021. Springer, 2021, vol. 12696, 648-677
- Efficient FHEW bootstrapping with small evaluation keys, and application to threshold homomorphic encryption. **Y. LEE** ; **C. HAZAY** ; **M. STAM et al.** Advances in Cryptology - EUROCRYPT 2023. Springer, 2023, vol. 14006, 227-256
- Public-key cryptosystems based on composite degree residuosity classes. **P. PAILLIER**. Advances in Cryptology - EUROCRYPT 1999. Springer, 1999, vol. 1592, 223-238
- On data banks and privacy homomorphisms. **R. L. RIVEST** ; **L. ADLEMAN** ; **M. L. DERTOUZOS**. Foundations of secure computation. Academic Press, 1978, 169-179
- **O. REGEV**. On lattices, learning with errors, random linear codes, and cryptography. *Journal of the ACM*, 2009, vol. 56 (6), 34-1, 34-40
- Homomorphic encryption: From private-key to public-key. **R. ROTHBLUM**. Theory of Cryptography (TCC 2011). Springer, 2011, vol. 6597, 219-234
- Fast blind rotation for bootstrapping FHEs. **B. XIANG** ; **J. ZHANG** ; **Y. DENG** ; **Y. DAI** ; **D. FENG**. Advances in Cryptology - CRYPTO 2023. Springer, 2023, vol. 14084, 3-36